# EUROPÄISCHE PATENTSCHRIFT

(11) **EP 1 193 092 B1**
(45) Veröffentlichungstag und Bekanntmachung des Hinweises auf die Patenterteilung: **31.03.2004**
(21) Anmeldenummer: 01120164.7
(22) Anmeldetag: 22.08.2001
(51) Int. Cl.: B60J 7/14, B60J 7/12

(54) **Cabriolet-Fahrzeugdach**
Roof for convertible vehicle
Toit pour véhicule convertible

(30) Priorität: 29.09.2000 DE 10048043
(43) Veröffentlichungstag der Anmeldung: 03.04.2002
(73) Patentinhaber: CTS Fahrzeug-Dachsysteme GmbH, 21079 Hamburg (DE)
(72) Erfinder: Halbweiss, Thomas, 71672 Marbach (DE); Bergerhoff, Harald, 22143 Hamburg (DE); Holst, Christian, 22605 Hamburg (DE)
(74) Vertreter: Müller, Gottfried

(56) Entgegenhaltungen:
- US-A- 2 267 471
- US-A- 4 784 428
- US-A- 4 828 317
- US-A- 5 456 516
- US-A- 5 593 202

## Beschreibung

Die Erfindung bezieht sich auf ein Cabriolet-Fahrzeugdach nach dem in US 5 456 516 A offenbarten Oberbegriff des Anspruches 1.

Cabriolet-Fahrzeugdächer sind entweder als Softtop mit einem Verdeckgestänge und einem Verdeck-Bezugstoff oder als Hardtop mit zwei oder drei in sich starren und relativ zueinander beweglich angeordneten Deckelschalen ausgeführt und können zwischen einer den Fahrgastinnenraum überdeckenden Schließstellung und einer den Fahrgastinnenraum öffnenden Ablagestellung verstellt werden. In Schließstellung übergreift das Fahrzeugdach die Seitenscheiben des Fahrzeugs, wobei über Dichtungselemente, die sich im Seitenbereich des Daches in Fahrzeuglängsrichtung erstrecken, ein wind- und wasserdichter Abschluss zwischen Fahrzeugverdeck und Seitenscheibenkante hergestellt wird.

Der Aufnahmeraum in der Fahrzeugkarosserie für die Versenkung der Seitenscheiben steht insbesondere im rückwärtigen Bereich des Fahrzeugs oftmals nur in beschränktem Maße zur Verfügung. Dies führt dazu, dass die hinteren Seitenscheiben nur mit einer reduzierten Breite ausgeführt werden können und dementsprechend der Sichtbereich eingeschränkt ist oder dass die hinteren Seitenscheiben in Cabrioletstellung nicht oder nur teilweise versenkt werden können.

Ein derartiges Fahrzeugdach ist aus der Druckschrift DE 43 27 729 A1 bekannt. Das Dach ist als Softtop ausgeführt und umfasst ein Verdeckgestänge und einen auf das Verdeckgestänge aufgespannten Bezugstoff umfasst. Das Softtop ist zwischen einer den Fahrzeuginnenraum überdeckenden Schließposition und einer den Innenraum freigebenden Öffnungsposition zu verstellen, in der das Verdeckgestänge und der Bezugstoff in einem Stauraum abgelegt sind. Die Seitenscheibe des Fahrzeugdaches ist über ein karosseriefestes Drehgelenk um eine Querachse zu verschwenken und kann in einer vertikalen Schwenkebene zwischen der aufgestellten, über die Karosserielinie herausragenden Schließposition und einer abgesenkten Öffnungsposition verstellt werden, in der die Seitenscheibe in einen Aufnahmeraum in der Fahrzeugkarosserie abgesenkt ist. Die Seitenscheibe ist fest mit der Karosserie verbunden, was die Bewegungsmöglichkeiten insbesondere auch des Verdeckgestänges einschränkt.

Die Druckschrift US 5 456 516 offenbart ein Fahrzeugdach mit einer an einem Dachteil gehaltenen Seitenscheibe, welche über einen schienenartigen Verstellmechanismus zwischen zwei unterschiedlichen Endpositionen zu verstellen ist, die der Schließstellung bzw. der Ablagestellung des Fahrzeugdaches zugeordnet sind. Der Stellmechanismus umfasst eine gekrümmte Schiene, entlang der die Seitenscheibe zum Erreichen der jeweiligen Endposition verschoben wird. Bei der Stellbewegung der Seitenscheibe relativ zum Fahrzeugdach handelt es sich um eine im Prinzip lineare, translatorische Bewegung, der nur aufgrund der Krümmung der Schiene eine rotatorische Komponente überlagert ist. Zur Überführung zwischen den Endpositionen entlang der Schiene sind hierfür geeignete Stellelemente bzw. Aktuatoren erforderlich.

Der Erfindung liegt das Problem zugrunde, ein Cabriolet-Fahrzeugdach zu schaffen, welches zuverlässig wind- und wasserdicht schließt und bei dem in Schließstellung eine gute Sicht für die Fahrzeuginsassen gewährleistet ist.

Dieses Problem wird erfindungsgemäß mit den Merkmalen des Anspruches 1 gelöst. Die Unteransprüche geben zweckmäßige Weiterbildungen an.

Zumindest eine Seitenscheibe des Fahrzeugs ist am Fahrzeugdach unverlierbar gehalten und kann somit die Öffnungs- und Schließbewegung des Daches mit ausführen. In Ablageposition des Fahrzeugdaches ist die Seitenscheibe gemeinsam mit dem Fahrzeugdach im Ablageraum des Fahrzeuges verstaut, so dass der Seitenbereich des Fahrzeuges in dem Abschnitt der betreffenden Seitenscheibe völlig offen ist. Bei der Überführung von Ablagestellung in Schließstellung wird die Seitenscheibe gemeinsam mit dem Fahrzeugdach in eine den Fahrgastinnenraum verschließende Position gebracht, wobei die der Fahrzeugkarosserie zugewandte Seite der Seitenscheibe dichtend, jedoch lösbar an einem Bauteil der Fahrzeugkarosserie anliegt.

Da nunmehr die Seitenscheibe am Fahrzeugdach gehalten ist und in Öffnungs- bzw. Ablagestellung der entsprechende Seitenbereich automatisch freigegeben ist, kann ein die Seitenscheibe aufnehmender Raum in der Fahrzeugkarosserie ebenso wie ein Seitenscheibenantrieb entfallen, wodurch eine konstruktive Vereinfachung der Fahrzeugkarosserie erreicht wird und außerdem auch der Sichtbereich insbesondere im rückwärtigen Teil des Fahrzeugdaches vergrößert werden kann.

Die Seitenscheibe ist über ein Drehgelenk mit dem Fahrzeugdach verbunden und kann zwischen einer ausgeklappten Position in Schließstellung des Daches und einer nach innen eingeklappten Position in Ablagestellung des Daches verschwenkt werden. Das Drehgelenk zwischen Seitenscheibe und Fahrzeugdach ermöglicht eine raumsparende Ablageposition von Fahrzeugdach einschließlich Seitenscheibe.

Im Falle einer gelenkigen Anbindung der Seitenscheibe am Fahrzeugdach ist die Bewegung der Seitenscheibe bei der Überführung zwischen Schließ- und Ablagestellung zweckmäßig kraftbeaufschlagt und ggl. kinematisch zwangsgeführt. In bevorzugter Ausführung ist ein Kraft- bzw. Federelement am Fahrzeugdach vorgesehen, welches die Seitenscheibe in ihre ausgeklappte Position beaufschlagt, so dass bei der Überführung des Daches von Ablage- in Schließposition die Seitenscheibe unter der Einwirkung des Kraft- bzw. Federelementes in die ausgeklappte Position verfährt. Bei der gegenläufigen Bewegung von Schließ- in Ablagestellung erfolgt zweckmäßig eine kinematische Führung der Seitenscheibe entgegen der Kraft des Federelementes.

Die obere Scheibenkante ist bevorzugt in einem Dichtelement aufgenommen, welches eine wind- und wasserdichte Verbindung zwischen oberer Seitenkante des Fahrzeugdaches und zugeordneter Scheibenkante der Seitenscheibe herstellt. Das Dichtelement kann außerdem zugleich das Drehgelenk bilden, welches eine Schwenkbewegung der Seitenscheibe gegenüber dem Fahrzeugdach ermöglicht. Hierzu weist das Dichtelement in vorteilhafter Ausführung einen Abschnitt mit verjüngtem Querschnitt auf, der eine Schwenkachse bildet und mit vergleichsweise geringem Kraftaufwand eine Schwenkbewegung der Seitenscheibe ermöglicht. Die Zusammenfassung von Dichtelement und Drehgelenk zu einem gemeinsamen Bauteil stellt eine konstruktiv einfache und raumsparende Ausführung dar.

Ein weiteres Dichtelement kann an der der Fahrzeugkarosserie zugewandten Seitenkante der Seitenscheibe vorgesehen sein. Dieses Dichtelement hat zum einen die Funktion, in Schließstellung des Fahrzeugdaches die untere Seitenkante der Seitenscheibe wind- und wasserdicht an die Fahrzeugkarosserie anzulegen. Zum anderen kann dieses untere Dichtelement an der Seitenscheibe auch eine Gleitfunktion übernehmen, indem bei der Überführungsbewegung zwischen Schließ- und Ablagestellung die der Fahrzeugkarosserie zugewandte Seite des unteren Dichtelements eine Gleitfläche bildet, die an der Fahrzeugkarosserie entlang gleitet.

Gegebenenfalls ist an der Fahrzeugkarosserie eine karosseriedichtung angeordnet, welches in Schließstellung mit dem Dichtelement an der Unterkante der Seitenscheibe zusammenwirkt. Dadurch kann ein verbesserter Toleranzausgleich bei zugleich hoher Dichtwirkung erreicht werden. Das Dichtelement an der Unterkante der Seitenscheibe kann bei der Überführungsbewegung zwischen Ablage- und Schließstellung des Fahrzeugdaches an der karosserieseitigen Dichtung vorteilhaft mit geringem Widerstand entlang gleiten.

Ein Ausführungsbeispiel der Erfindung wird nachstehend an Hand der Zeichnungen näher beschrieben. Es zeigen:
- Fig. 1: eine perspektivische Ansicht auf ein Cabriolet-Fahrzeugdach mit einer im hinteren seitlichen Bereich angeordneten, dreieckförmigen Seitenscheibe, die unverlierbar am Fahrzeugdach gehalten ist,
- Fig. 2: einen Schnitt durch die hintere dreieckförmige Seitenscheibe einschließlich der einfassenden Dichtelemente gemäß Schnittlinie II - II aus Fig. 1,
- Fig. 3: das Cabriolet-Fahrzeugdach in einer Zwischenstellung zwischen Schließ- und Ablageposition.

In den folgenden Figuren sind gleiche Bauteile mit gleichen Bezugszeichen versehen.

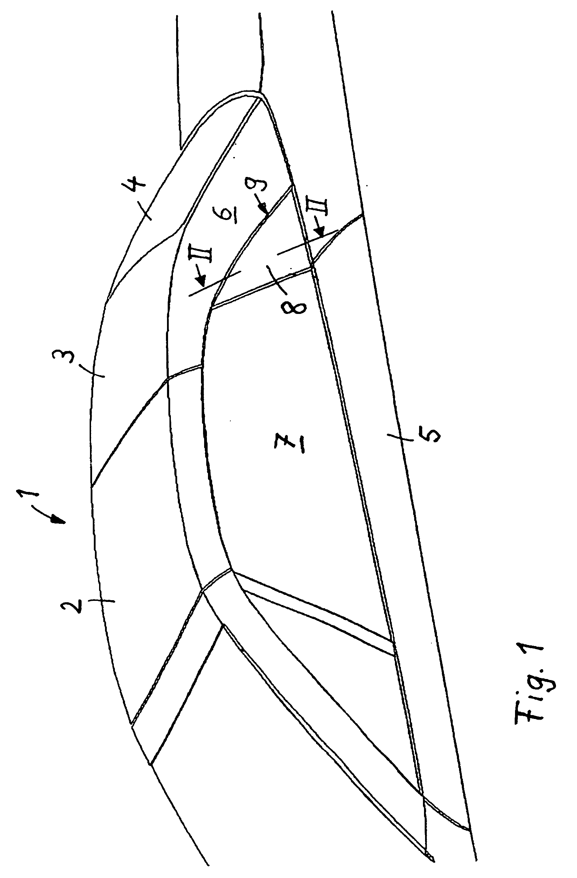

Das in Fig. 1 dargestellte Cabriolet-Fahrzeugdach 1 ist zwischen der gezeigten, den Fahrzeuginnenraum überdeckenden Schließposition und einer Ablageposition zu verstellen, in der das Fahrzeugdach 1 in einem Ablageraum hinter dem Fahrgastinnenraum abgelegt ist. Das Fahrzeugdach 1 ist als Hardtop ausgeführt und besteht aus einem vorderen Dachteil 2, das in Schließposition unmittelbar an einen Windschutzscheibenrahmen des Fahrzeuges angrenzt, und einem hinteren Dachteil 3, in das eine Heckscheibe 4 integriert ist. Das vordere Dachteil 2 ist über eine Verstellkinematik an das hintere Dachteil 3 angekoppelt, welches über eine weitere, fahrzeugfeste Kinematik mit der Fahrzeugkarosserie 5 verbunden und gegenüber dieser verschwenkbar ausgebildet ist.

Im hinteren seitlichen Bereich des Fahrzeugs ist im Anschluss an eine vordere, in die Fahrzeugkarosserie versenkbare Seitenscheibe 7 eine weitere, etwa dreieckförmige Seitenscheibe 8 vorgesehen, welche im Unterschied zur vorderen Seitenscheibe 7 nicht karosseriefest, sondern dachfest gehalten ist. Die hintere Seitenscheibe 8 ist an einer C-Säule 6, welche einen Teil des hinteren Dachteiles 3 bildet, befestigt und erstreckt sich in Schließstellung des Fahrzeugdaches 1 zwischen C-Säule und Fahrzeugkarosserie sowie vorderer Seitenscheibe 7. Die hintere Seitenscheibe 8 ist über ein Dichtelement 9 mit der C-Säule 6 bzw. dem hinteren Dachteil 3 verbunden.

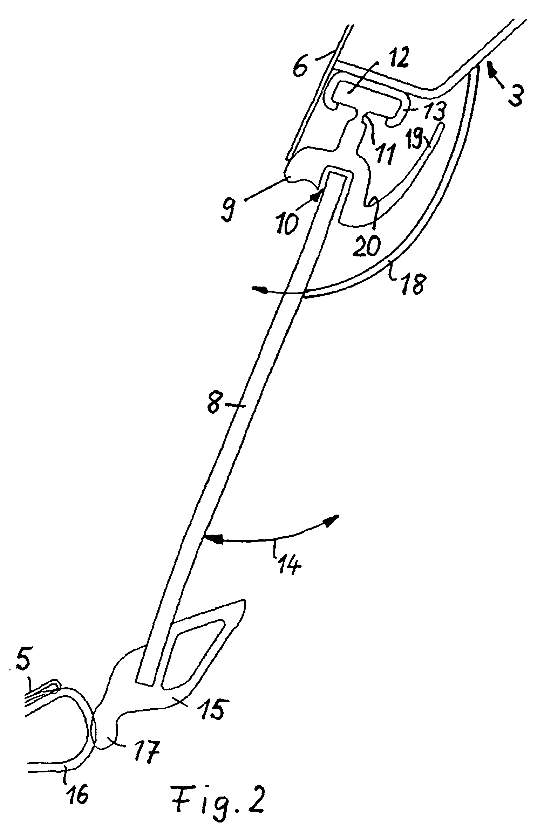

Wie der Schnittdarstellung nach Fig. 2 zu entnehmen, ist die obere, dem Fahrzeugdach zugewandte Scheibenkante der hinteren Seitenscheibe 8 in eine Aufnahmerille 10 im Dichtelement 9 aufgenommen. Das Dichtelement 9 weist zwischen der Aufnahmerille 10 für die Seitenscheibe 8 und einem Befestigungsabschnitt 12 des Dichtelementes 9, der in einer Befestigungsschiene 13 des hinteren Dachteiles 3 aufgenommen ist, einen verjüngten Querschnitt 11 auf, welcher ein Scharnier- bzw. ein Drehgelenk bildet, um das die hintere Seitenscheibe 8 gegenüber dem hinteren Dachteil 3 zu verschwenken ist. Die hintere Seitenscheibe 8 kann somit aus der in Fig. 2 gezeigten Schließstellung, in der die Seitenscheibe vollständig aufgeklappt ist und wind- und wasserdicht an der Fahrzeugkarosserie 5 anliegt, nach innen in Richtung des Fahrzeuginnenraumes verschwenkt werden und eine eingeklappte Position einnehmen. Vorteilhaft beträgt der Schwenkwinkel, um den die hintere Seitenscheibe 8 im verjüngten Querschnitt 11 des Dichtelementes 9 zu verschwenken ist, weniger als etwa 20°, insbesondere etwa 10°. Gegebenenfalls kann es aber auch zweckmäßig sein, einen Schwenkwinkel von 90° oder mehr zuzulassen, damit die Seitenscheibe 8 im eingeklappten Zustand in Ablageposition des Fahrzeugdaches etwa parallel zur Dachfläche des hinteren Dachteiles zum Liegen kommt, wodurch ein geringes Ablagemaß erreicht werden kann.

Am oberen Dichtelement 9 ist auf der dem Fahrzeuginnenraum zugewandten Seite ein einteilig mit dem Dichtelement 9 ausgebildeter, nach oben in Richtung Innenseite des hinteren Dachteils 3 weisender Fortsatz 19 ausgebildet, dessen Innenseite einen Wasserführungskanal 20 zur Ableitung von Wasser bildet. Der Fortsatz 19 am oberen Dichtelement 9 bietet außerdem einen Sichtschutz zur Abdeckung des Aufnahmebereiches der Seitenscheibe 8 im Dichtelement 9.

Auf der dem Dachteil 3 abgewandten Seite ist im Bereich der freien Scheibenkante der hinteren Seitenscheibe 8 ein weiteres, unteres Dichtelement 15 vorgesehen, welches mit der Seitenscheibe 8 verbunden ist und der Fahrzeugkarosserie 5 zugewandt ist. An der Fahrzeugkarosserie 5 ist eine Karosseriedichtung 16 angeordnet, die in Schließstellung des Fahrzeugdaches mit dem unteren Dichtelement 15 an der hinteren Seitenscheibe 8 zusammenwirkt. In Schließstellung liegt eine Dichtnase 17, die am unteren Dichtelement 15 ausgebildet ist, wind- und wasserdicht an der Karosseriedichtung 16 an. Die Berührfläche zwischen Dichtnase 17 des unteren Dichtelements 15 und Karosseriedichtung 16 bildet zweckmäßig eine Gleitfläche, an der die Dichtnase 17 des unteren Dichtelements 15 bei einer Bewegung der hinteren Seitenscheibe 8 - hervorgerufen durch die Überführungsbewegung des Fahrzeugdaches zwischen Schließ- und Ablageposition - entlang gleiten kann.

Die Seitenscheibe 8 wird von einem Federelement 18, welches am hinteren Dachteil 3 abgestützt ist, um die durch den verjüngten Querschnitt 11 im oberen Dichtelement 9 definierte Schwenkachse nach außen in Richtung der aufgeklappten Stellung beaufschlagt, wodurch eine Dichtkraft erzeugt wird, mit der die Dichtnase 17 am unteren Dichtelement 15 an der Karosseriedichtung 16 anliegt.

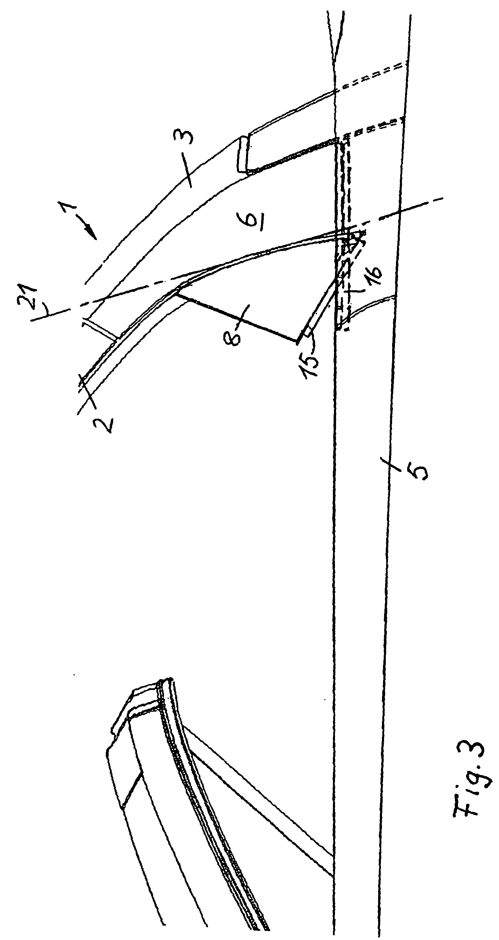

Der Darstellung nach Fig. 3 ist zu entnehmen, dass bei einer Überführung des Fahrzeugdaches 1 von Schließ- in Ablageposition die hintere, an der C-Säule 6 des hinteren Dachteiles 3 angeordnete Seitenscheibe 8 um die Schwenkachse 21 des Drehgelenks zwischen Seitenscheibe und hinterem Dachteil 3 nach innen verschwenkt wird. Die Schwenkachse 21 verläuft etwa entlang der Seitenkante des hinteren Dachteils 3.

Während der Überführungsbewegung gleitet das untere Dichtelement 15, welches an der unteren Kante der Seitenscheibe 8 angeordnet ist, an der Karosseriedichtung 16 entlang, welche sich im Fahrzeug etwa horizontal über einen Abschnitt erstreckt, der bei der Verstellbewegung des Fahrzeugdaches 1 von der Seitenscheibe 8 in Fahrzeuglängsrichtung von der Seitenscheibe 8 überstrichen wird. Während der Überführungsbewegung wird die hintere Seitenscheibe 8 von dem in Fig. 2 dargestellten Federelement 18 nach außen kraftbeaufschlagt, so dass während der gesamten Überführungsbewegung das untere Dichtelement 15 an der Unterkante der Seitenscheibe 8 dichtend an der Karosseriedichtung 16 anliegt. Während der Überführung des Daches in die rückwärtige Ablageposition wird die hintere Seitenscheibe 8 zunehmend nach innen gedrückt, da bei einer Versenkung des hinteren Dachteiles 3 des Fahrzeugdaches 1 in den rückwärtigen Ablageraum der zur Verfügung stehende Platz für die geringfügig seitlich abstehende Seitenscheibe 8 immer geringer wird.

Es kann gegebenenfalls zweckmäßig sein, zusätzlich oder alternativ zum oberen Dichtelement an der Seitenscheibe ein separates Drehgelenk für die Schwenkbewegung der Seitenscheibe gegenüber dem Fahrzeugdach vorzusehen. Darüber hinaus kann es zweckmäßig sein, die Bewegung der Seitenscheibe bei der Überführung zwischen Schließ- und Ablageposition in beiden Bewegungsrichtungen des Fahrzeugdaches einer kinematischen Zwangsführung zu unterwerfen, welche insbesondere als gekoppelte Bewegung in Abhängigkeit von der Öffnungs- und Schließbewegung des Fahrzeugdaches auszuführen ist.

## Patentansprüche

1. Cabriolet-Fahrzeugdach, das zwischen einer Schließstellung und einer Öffnungsstellung zu verstellen ist, mit einer im Seitenbereich zwischen Fahrzeugdach (1) und Fahrzeugkarosserie (5) angeordneten Seitenscheibe (8), die unverlierbar über ein Drehgelenk mit dem Fahrzeugdach (1) verbunden ist,
wobei in Schließstellung die dem Fahrzeugdach (1) abgewandte Seite der Seitenscheibe (8) dichtend, jedoch lösbar an der Fahrzeugkarosserie (5) anliegt und dass die Seitenscheibe (8) zwischen einer ausgeklappten Position in Schließstellung und einer nach innen in Richtung des Fahrzeuginnenraumes eingeklappten Position in Öffnungsstellung des Fahrzeugdaches (1) verschwenkbar ist, **dadurch gekennzeichnet dass** die Seitenscheibe (8) in ihre ausgeklappte Position kraftbeaufschlagt ist.

2. Cabriolet-Fahrzeugdach nach Anspruch 1,
**dadurch gekennzeichnet,**
**dass** die dem Fahrzeugdach (1) zugewandte Scheibenkante der Seitenscheibe (8) in einem am Fahrzeugdach (1) befestigten Dichtelement (9) aufgenommen ist.

3. Cabriolet-Fahrzeugdach nach Anspruch 2,
**dadurch gekennzeichnet,**
**dass** das Dichtelement (9) am Fahrzeugdach (1) das Drehgelenk für die Seitenscheibe (8) bildet.

4. Cabriolet-Fahrzeugdach nach Anspruch 3,
**dadurch gekennzeichnet,**
**dass** das Dichtelement (9) einen Abschnitt mit verjüngtem Querschnitt (11) aufweist, der eine Schwenkachse bildet.

5. Cabriolet-Fahrzeugdach nach einem der Ansprüche 1 bis 4,
**dadurch gekennzeichnet,**
**dass** an der freien, der Fahrzeugkarosserie (5) zugewandten Scheibenkante der Seitenscheibe (8) ein weiteres Dichtelement (15) angeordnet ist.

6. Cabriolet-Fahrzeugdach nach einem der Ansprüche 1 bis 5,
**dadurch gekennzeichnet,**
**dass** an der Fahrzeugkarosserie (5) eine mit der Seitenscheibe zusammenwirkende Karosseriedichtung (16) vorgesehen ist.

7. Cabriolet-Fahrzeugdach nach Anspruch 5 und 6,
**dadurch gekennzeichnet,**
**dass** die Karosseriedichtung (16) eine Gleitfläche für das weitere Dichtelement (15) an der Seitenscheibe (8) bildet.

8. Cabriolet-Fahrzeugdach nach einem der Ansprüche 1 bis 7,
**dadurch gekennzeichnet,**
**dass** die Seitenscheibe (8) eine Dreieckscheibe ist, welche im Übergang eines hinteren Dachteils (3) zur Fahrzeugkarosserie (5) angeordnet ist.

## Claims

1. Cabriolet vehicle roof which can be adjusted between a closed position and an open position, having a side window (8) which is arranged in the side region between the vehicle roof (1) and vehicle body (5) and is connected captively to the vehicle roof (1) via a rotary joint, that side of the side window (8) which faces away from the vehicle roof (1) bearing in a sealing, but releasable manner against the vehicle body (5) in the closed position, and the side window (8) being pivotable between a swung-out position in the closed position and a position in which it is swung inwards in the direction of the vehicle interior in the open position of the vehicle roof (1), **characterized in that** the side window (8) is power-actuated into its swung-out position.

2. Cabriolet vehicle roof according to Claim 1, **characterized in that** that edge of the side window (8) which faces the vehicle roof (1) is held in a sealing element (9) fastened to the vehicle roof (1).

3. Cabriolet vehicle roof according to Claim 2, **characterized in that** the sealing element (9) on the vehicle roof (1) forms the rotary joint for the side window (8).

4. Cabriolet vehicle roof according to Claim 3, **characterized in that** the sealing element (9) has a section with a tapered cross section (11) which forms a pivot axis.

5. Cabriolet vehicle roof according to one of Claims 1 to 4, **characterized in that** a further sealing element (15) is arranged on that free edge of the side window (8) which faces the vehicle body (5).

6. Cabriolet vehicle roof according to one of Claims 1 to 5, **characterized in that** a body seal (16) which interacts with the side window is provided on the vehicle body (5).

7. Cabriolet vehicle roof according to Claims 5 and 6, **characterized in that** the body seal (16) forms a sliding surface for the further sealing element (15) on the side window (8).

8. Cabriolet vehicle roof according to one of Claims 1 to 7, **characterized in that** the side window (8) is a triangular window which is arranged in the transition of a rear roof part (3) to the vehicle body (5).

## Revendications

1. Toit de véhicule convertible, qui doit être déplacé entre une position de fermeture et une position d'ouverture, avec une vitre latérale (8) disposée dans la région latérale entre le toit du véhicule (1) et la carrosserie du véhicule (5), laquelle est connectée de manière imperdable par le biais d'une articulation pivotante au toit du véhicule (1),
le côté de la vitre latérale (8) opposé au toit du véhicule (1) s'appliquant hermétiquement mais de manière desserrable contre la carrosserie du véhicule (5) dans la position de fermeture, et la vitre latérale (8) pouvant pivoter entre une position sortie vers l'extérieur dans la position de fermeture et une position rabattue vers l'intérieur dans la direction de l'habitacle du véhicule dans la position d'ouverture du toit du véhicule (1), **caractérisé en ce que** la vitre latérale (8) est sollicitée par une force dans sa position sortie vers l'extérieur.

2. Toit de véhicule convertible selon la revendication 1,
**caractérisé en ce que**
le bord de la vitre latérale (8) tourné vers le toit du véhicule (1) est reçu dans un élément d'étanchéité (9) fixé au toit du véhicule (1).

3. Toit de véhicule convertible selon la revendication 2,
**caractérisé en ce que**
l'élément d'étanchéité (9) sur le toit du véhicule (1) forme l'articulation pivotante pour la vitre latérale (8).

4. Toit de véhicule convertible selon la revendication 3,
**caractérisé en ce que**
l'élément d'étanchéité (9) présente une portion avec une section transversale amincie (11) qui forme un axe de pivotement.

5. Toit de véhicule convertible selon l'une quelconque des revendications 1 à 4,
**caractérisé en ce**
**qu'**un autre élément d'étanchéité (15) est disposé sur le bord libre de la vitre latérale (8) tourné vers la carrosserie du véhicule (5).

6. Toit de véhicule convertible selon l'une quelconque des revendications 1 à 5,
**caractérisé en ce que**
l'on prévoit sur la carrosserie du véhicule (5) un joint de carrosserie (16) coopérant avec la vitre latérale.

7. Toit de véhicule convertible selon les revendications 5 et 6,
**caractérisé en ce que**
le joint de carrosserie (16) forme une face de glissement pour l'élément d'étanchéité supplémentaire (15) sur la vitre latérale (8).

8. Toit de véhicule convertible selon l'une quelconque des revendications 1 à 7,
**caractérisé en ce que**
la vitre latérale (8) est une vitre triangulaire qui est disposée dans la transition d'une partie de toit arrière (3) à la carrosserie du véhicule (5).
